# EUROPEAN PATENT SPECIFICATION

(11) **EP 1 878 628 B1**
(45) Date of publication and mention of the grant of the patent: **30.05.2012**
(21) Application number: 06014365.8
(22) Date of filing: 11.07.2006
(51) Int. Cl.: B60R 25/10, B60R 25/04, G08G 1/123

(54) **Anti-theft system**
Diebstahlsicherung
Dispositif antivol

(43) Date of publication of application: 16.01.2008
(73) Proprietor: Harman Becker Automotive Systems GmbH, 76307 Karlsbad (DE)
(72) Inventor: Krippgans, Thomas, 89077 Ulm (DE)
(74) Representative: Bertsch, Florian Oliver

(56) References cited:
- WO-A-01/25927
- FR-A1- 2 756 083
- US-A1- 2005 130 670
- US-A1- 2006 082 471

## Description

### Field of the invention

This invention relates to vehicle anti theft systems and to a method for determining the position of a vehicle. The invention relates especially to a system for tracking a vehicle and alerting the respective authorities in case of a vehicle theft.

### Background of the invention

Vehicle theft has become a severe problem in the last years. Often the stolen vehicles are transferred to other countries and in most of the case it is not possible to relocate the stolen vehicles. In order to protect a vehicle from being stolen, different methods and systems exist. By way of example, mechanical security systems exist which help to secure the steering wheel. Additionally, alarm systems are known which emit an alarm sound when the vehicle is stolen and when the alarm is activated. Additionally, security systems are known in which several small radio frequency transceiver are hidden in different places in the vehicle. When a theft is reported to the police, a routine entry into the police crime computer automatically activates the radio frequency transceiver in the vehicle transmitting an audible signal allowing to locate the vehicle. However, in this case the installation of the different radio frequency transmitters in the vehicle is necessary.

Recently, the use of automotive infotainment systems and/or the use of hands free communication systems in vehicles have become popular. These infotainment systems or hands free systems often comprise a network access device allowing to use a mobile telephony network.

US2006/0082471 shows a method for identifying a vehicle's position, comprising the steps of detecting a trigger event in the vehicle, automatically retrieving a vehicle identification information when a trigger event is detected, building up a connection to an external database of stolen vehicles, transmitting the retrieved vehicle identification information via a mobile telephony network to said database using a mobile communication unit, verifying, whether the identified vehicle is comprised in the database of stolen vehicles, and, in the affirmative, determining the position of the vehicle. In this system no use is made of a hands free installation to carry out an anti-theft function.

In view of the foregoing background there exists a need to provide a vehicle anti theft system which allows the tracking of the vehicle in case of a theft without the need to install additional security systems.

### Summary

This need is met by the features of the independent claims. In the dependent claims preferred embodiments of the invention are described.

According to a first aspect of the invention, a method is provided for identifying a vehicle's position, the method comprising the following steps: When a vehicle is started, the start of the engine is detected. In addition, the vehicle is identified by retrieving a vehicle identification information in the vehicle. In a next step a connection is built to an external database of stolen vehicles via a wireless communication system and the retrieved vehicle information is transmitted to said external database of stolen vehicles. In the database it is verified whether the identified vehicle is comprised in the database of stolen vehicles. If this is the case, the position of the vehicle is determined. In modern vehicles the transmission of data to an external database using a wireless communication system is often provided. This signal path is used for transmitting a vehicle identification signal every time the vehicle is started. According to the invention, there is no need to install additional security components in the vehicle. The existing communication modules provided in a vehicle can be used for determining the position of the vehicle. Every time the vehicle is started, the identification information is automatically transmitted. This has the advantage that in case of a vehicle theft, there is no need to activate any procedure in the vehicle from outside the vehicle. The activation of a position transmission procedure remote from the vehicle might not always be possible. According to the invention, the position transmission is initiated by the vehicle itself.

According to the invention, the wireless communication system is a mobile telephony network and the vehicle identification information is transmitted via said mobile telephony network. The use of mobile communication modules in vehicles or the use of hands free communication components comprising a network access device allowing a data transfer via the mobile telephony network is proliferating and is comprised in nearly every vehicle. Hands free systems are often designed in such a way that even without the use of the mobile communication unit (cell phone), a signal exchange with the mobile telephony network is possible. When a vehicle is stolen, the authorization to use the mobile communication system in the vehicle is normally not present, as normally a unit allowing the identity of the subscriber such as the subscriber identity module card (SIM card) is not present in the vehicle. However, in mobile telecommunication networks a transmission mode exists, allowing the transmission of data even without the presence of such a SIM card. By way of example, an emergency call can be activated without the presence of a SIM card. Due to the fact that the SIM card is normally not present in a stolen vehicle, it is normally not possible to call the mobile communication unit in the vehicle and to retrieve in this way the information needed to determine the position of the vehicle. According to the invention, the transmission of a vehicle identification information is initiated upon the vehicle start, this normally being a situation where the normal functioning of the mobile communication unit in the vehicle can normally not be assured. Nevertheless, a protocol is started when the vehicle engine is started in which the vehicle is identified and the identified information is transmitted via the mobile network where it can be checked whether the vehicle is registered as a stolen vehicle.

According to a preferred embodiment of the invention, the position of the vehicle is determined outside the vehicle based on the transmitted vehicle identification signal or based on a cell information of the mobile communication system. In mobile telecommunication networks it is possible to determine the position of a mobile communication unit. The signals received from the mobile communication unit are received and forwarded by base stations of the mobile communication system. Each base station has a certain coverage, so that when the signal is received by only one base station, the position of the vehicle can be at least determined in a first approximation. When the signal from the vehicle is detected by several base stations of the mobile network, the position of the vehicle can be determined with a high accuracy, as the position can be determined based on the received signal intensity and based on geometrical calculations taking into account the positions of the different base stations receiving the signal.

According to another embodiment, it is also possible to use the position information of a navigation system provided in the vehicle. If such a navigation system is present in the vehicle, the information that the vehicle is a stolen vehicle can be transmitted back to the vehicle where the position detecting unit of the navigation system can be activated, the determined position being continuously transmitted via the mobile network. Furthermore, it is possible that, when the information is received in the vehicle that the vehicle is a stolen vehicle, the vehicle continues to transmit the identification information via the mobile network, so that it is also possible to track the vehicle position by extracting the position information from the cell information of the mobile network.

When it is determined that the identified vehicle is comprised in the list of stolen vehicles, the position information of the vehicle can be transmitted to a responsible authority. The responsible authority may be the network provider of the mobile network, maybe the police, the insurance company of the vehicle or any other entity collecting the position data of stolen vehicles. The informed authority can then take the necessary steps and can initiate the recovery of the stolen vehicle.

Additionally, it is possible that the information that the vehicle is stolen is transmitted to the vehicle and that in response to this information the following activities can be started. By way of example, the engine can be cut off or the supply of fuel to the engine can be stopped, the horn of the vehicle can be activated, and when a camera is comprised in the vehicle, a photo can be taken from the passenger compartment of the vehicle and can be transmitted back via the mobile network.

According to another aspect of the invention, a vehicle anti theft system is provided comprising a detector detecting the start of the engine of the vehicle. Furthermore, a mobile communication unit is provided for communicating via a wireless communication system to other systems outside the vehicle. A vehicle identification unit automatically retrieves the vehicle identification information when the engine of the vehicle is started and a transmitter transmits the vehicle identification information via the wireless communication unit to an external database of stolen vehicles. Furthermore, a position determination unit is provided which, upon detection that the vehicle is recognized as a stolen vehicle, determines the vehicle position. With this system a tracking of the vehicle becomes possible using existing hardware components of a vehicle. According to the invention, the wireless communication is a mobile network, and the mobile communication unit in the vehicle comprises a subscriber identification unit allowing to identify the subscriber of the mobile communication unit by a subscriber identification card. According to the invention, the wireless communication unit of the vehicle transmits the vehicle identification information even when the subscriber identification card is not connected to the mobile communication unit. It should be understood that the subscriber identification card may also be present in the mobile communication unit in the vehicle, however, in case of a stolen vehicle the subscriber identification card is normally not present in the vehicle or the mobile communication unit is not in an activated in order to identify the subscriber of the mobile communication unit can be identified. According to the invention, the transmission of the vehicle identification information is possible without the subscriber identification card being present in the vehicle.

The mobile communication unit can be a cellular phone installed in the vehicle. According to the invention, the mobile communication unit is a hands free system comprising a network access device. Such a hands free system is normally used in connection with a cell phone, the hands free system retrieving the subscriber identification information from the subscriber identification card provided in the cell phone. The data are transmitted via the network access device of the hands free system. Preferably, the position determination unit determines the position of the vehicle based on the cell information of the mobile network, the position determination unit being outside the vehicle and being connected to the mobile network for retrieving the data needed to determine the position from where the data were received. As explained above, it is possible to determine the position of the mobile communication unit provided in the vehicle based on the signal received from the mobile network. It should be understood that it is also possible to additionally determine the position by using a position detecting unit provided in the vehicle itself.

According to another aspect of the invention, the database of stolen vehicles is provided on a server accessible over the wireless communication network, i.e. the mobile telephony network. When it is determined that the vehicle is a stolen vehicle, the mobile network may transmit a signal back to the vehicle, and an engine control unit may interrupt the functioning of the vehicle engine upon detection of the fact that the vehicle is stolen.

In the following, the invention is described in further detail in connection with the accompanying drawings.

### Brief description of the drawings

Fig. 1 is a schematic view of a vehicle anti theft system of the invention, and
Fig. 2 is a flowchart for operating the vehicle anti theft system shown in Fig. 1.

### Detailed description of the preferred embodiments

The invention will now be described more fully hereinafter with reference to the accompanying drawings in which preferred embodiments of the invention are shown.

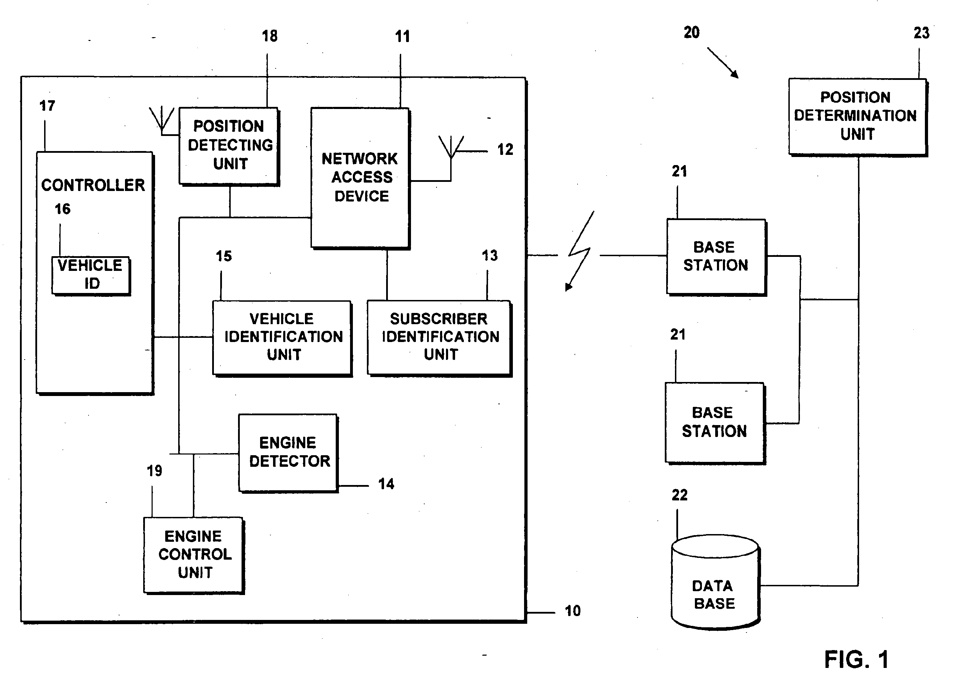

Referring to Fig. 1, the vehicle anti theft system according to the invention is now initially described. The system comprises components comprised in the vehicle 10 and comprises components comprised in the wireless communication system which, in the example shown, is a mobile telephony network. In the vehicle 10 a network access device 11 is provided, the network access device 11 being part of a hands free system of the vehicle. The network access device 11 is connected to an antenna 12 through which a connection can be established to the mobile network 20, in which the signal of the vehicle 10 is received by base stations 21 of the mobile network. A mobile communication unit to which the network access device belongs, comprises additionally a subscriber identification unit allowing to identify the subscriber of the mobile communication unit. To this end, normally a subscriber identification module card (SIM card) is used in connection with the subscriber identification unit. The use of the mobile communication unit is normally not possible when the subscriber identification card is not connected to the subscriber identification unit. However, the network access device can nevertheless transmit data via the mobile communication system without the knowledge of the identity of the subscriber, e.g. for an emergency call.

Thus, the network access device is able to transmit data to the base stations 21 without the presence of the subscriber identification card.

The system according to the invention also comprises an engine detector 14 detecting the start of the engine of the vehicle. When the start of the engine is detected, a process is automatically started where a vehicle identification unit 15 retrieves a vehicle identification information comprised in a memory 16 of a controller 17. This vehicle identification information is then fed to the network access device where the vehicle identification information is transmitted to the base station 21. From the base station the vehicle identification information is transmitted to a server 22 comprising a database of stolen vehicles. The server checks whether the identified vehicle is comprised in the list of stolen vehicles provided in the database. If this is the case, a position determination unit 23 processes the signal received from the base stations and determines a position of the vehicle from which the signal was received. In the mobile network the position can be determined when it is known which base station received the signal from the network access device 11 of the vehicle. When only one base station receives the signal, the position can be determined in a first approximation as it can be deduced that the vehicle is somewhere in the coverage zone of the base station. If the signal is received by several base stations 21, the position can be determined more exactly as with the knowledge of the position of the base station and with the knowledge of the signal intensity of the received signal, the position of the mobile communication unit can be determined. In the vehicle additionally a navigation system may be provided comprising a position detecting unit 18 detecting the position using signals received by a satellite such as a GPS system and using other driving information of the vehicle. Additionally, an engine control unit 19 may be provided which can be configured in such a way that the engine control unit controls the functioning of the engine of the vehicle. When it is determined that the vehicle is registered as a stolen vehicle in the database 22, a signal can be transmitted back to the vehicle 10, the vehicle 10 continuing transmitting the signals to the mobile network so that the position can be determined continuously by the position determination unit 23. Furthermore, the engine control unit 19 may control different functions of the engine depending on the result of the information received from the mobile network.

The different components in the vehicle can exchange information between each other using network provided in the vehicle. The network can be a wired network such as a MOST bus or CAN bus, however wireless transmission of adapt is also possible using technologies such as Bluetooth, etc.

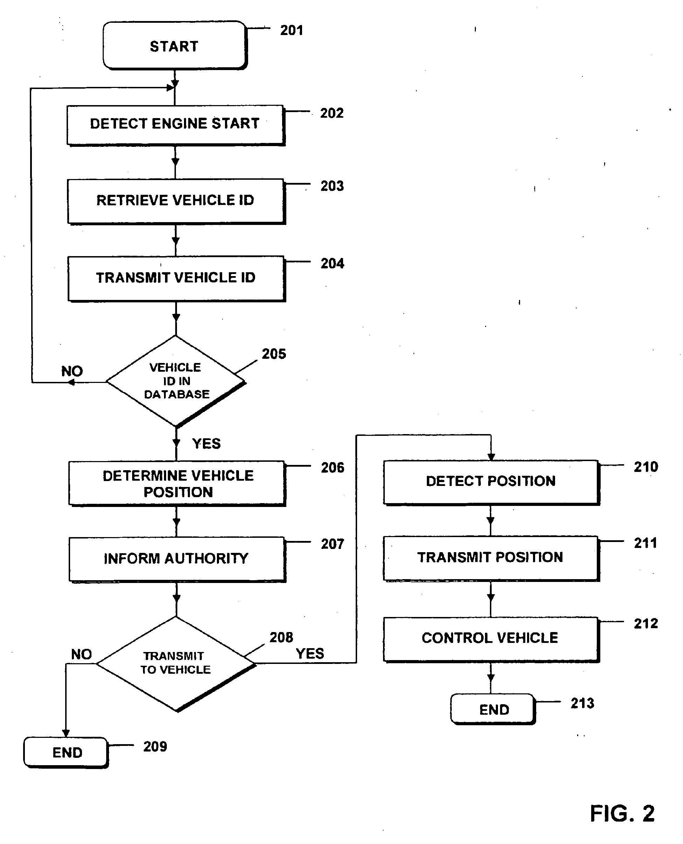

In Fig. 2 a flowchart showing the different steps of a method for identifying a vehicle's position is shown. The method starts in step 201. In step 202 it is detected when the vehicle engine is started. When the vehicle engine was started, another process automatically runs where the vehicle identification information is retrieved from the vehicle in step 203. This vehicle identification information is then transmitted via the mobile network in step 204. In a next step 205 it is checked whether the identified vehicle is registered as a stolen vehicle by comparing the identification information to the information stored in the database 22. When the vehicle is not registered as a stolen vehicle, the method returns to the beginning, detecting again whether the engine of the vehicle was started.

If it is, however, detected in step 205 that the vehicle is detected in the database 22, the position of the vehicle is determined in step 206. As mentioned in connection with Fig. 1, this can be either done by processing the signal received by the base station or by detecting the position information transmitted from position detecting units 18. As an option, the responsible authority can be informed, the authority being by way of example the network provider, the police or any other authority (step 207). In the next step it is then asked whether the information that the vehicle is a stolen vehicle is transmitted back to the vehicle (step 208). If this is not the case, the method ends in step 209. In this case, no further action is taken. Up to now, all the steps carried out can be carried out without notice of the person responsible for the vehicle theft. When the vehicle is started, the vehicle ID is automatically transmitted via the mobile communication system to the database 22 without notice of the person in charge of the vehicle theft. The car's snatcher does not recognize that the position information is transmitted, so that he does not notice that he may be pursued.

Furthermore, when the information has been transmitted back to the vehicle, the system may continue to detect the position of the vehicle in step 210 and to transmit this position again via the mobile network to the responsible authority. If no position detecting unit is provided in the vehicle, the vehicle's position can also be determined when the network access device continues transmitting data via the mobile communication system. According to another embodiment of the invention, the functioning of the vehicle may be controlled in step 212, e.g. the engine of the vehicle may be cut off, the fuel supply may be cut, the horn may be activated etc. It should be understood that any other reactions are possible when it is detected that the vehicle is registered as a stolen vehicle. The method ends in step 213. Furthermore, it is also possible that the step 212 is omitted so that the vehicle continues transmitting data.

As can be seen from the above described system, the position of the vehicle can be determined easily. There is no need to install additional hardware in the vehicle. Furthermore, the present invention allows to use the mobile network even if a subscriber identification was not carried out.

## Claims

1. Method for identifying a vehicle's position, comprising the following steps:
- detecting the start of an engine of the vehicle,
- automatically retrieving a vehicle identification information from the vehicle when the engine is started,
- building up a connection to an external database of stolen vehicles,
- transmitting the retrieved vehicle identification information via a mobile telephony network to said database using a mobile communication unit, the mobile communication unit comprising a subscriber identification unit allowing to identify the subscriber of the mobile communication unit by a subscriber identification card, wherein the mobile communication unit is a hands free system comprising a network access device, the hands-free system retrieving the subscriber identification information from a subscriber identification card provided in a cell phone, and wherein the mobile communication unit enables the transmission of the vehicle identification information without the presence of the subscriber identification card,
- verifying, whether the identified vehicle is comprised in the database of stolen vehicles, and, in the affirmative,
- determining the position of the vehicle.

2. Method according to claim 1, wherein the position of the vehicle is determined outside the vehicle based on the transmitted information signal and/or based a cell information of the mobile communication system.

3. Method according to any of the preceding claims, wherein the position of the vehicle is determined based on a satellite radio signal.

4. Method according to any of the preceding claims, wherein, when it is determined that the identified vehicle is comprised in the list of stolen vehicles, the supply of fuel to the engine is stopped.

5. Method according to any of the preceding claims, wherein, when it is determined that the identified vehicle is comprised in the list of stolen vehicles, the position information of the vehicle is transmitted to a responsible authority.

6. Method according to any of the preceding claims, wherein, when it is determined that the identified vehicle is comprised in the list of stolen vehicles, at least one of the following activities are started: the vehicle engine is cut off, the horn of the vehicle is activated, a photo form the passenger compartment is taken.

7. Vehicle anti theft system comprising:
- a detector detecting the start of the engine of the vehicle,
- a mobile communication unit for communicating to the outside of the vehicle via a wireless communication system, wherein the wireless communication system is a mobile telephony network, the mobile communication unit comprising a subscriber identification unit allowing to identify the subscriber of the mobile communication unit by a subscriber identification card, and wherein the mobile communication unit is a hands free system comprising a network access device, the hands-free system being adapted to retrieve the subscriber identification information from a subscriber identification card provided in a cell phone,
- a vehicle identification unit automatically retrieving a vehicle identification information from the vehicle when the engine is started,
- a transmitter transmitting the vehicle identification information to an external database of stolen vehicles via the mobile telephony network, wherein the mobile communication unit enables the transmission of the vehicle identification information without the presence of the subscriber identification card, and
- a position determination unit which, upon detecting that the vehicle is recognized as a stolen vehicle determines the position of the vehicle.

8. Vehicle anti theft system according to claim 7, wherein the position determination unit is comprised outside the vehicle.

9. Vehicle anti theft system according to any of claims 7 to 8, wherein the mobile communication system comprises a network access device with which information can be transmitted via the wireless communication network.

10. Vehicle anti theft system according to any of claims 7 to 9, wherein the position determination unit determines the position of the vehicle based on the cell information of a mobile telephony network.

11. Vehicle anti theft system according to any of claims 7 to 10, wherein the database of stolen vehicles is provided on a server accessible over the wireless communication network.

12. Vehicle anti theft system according to any of claims 7 to 11, **characterized by** further comprising a engine control unit which, upon detection that the vehicle is stolen, interrupts the functioning of the vehicle engine.

## Patentansprüche

1. Verfahren zum Bestimmen einer Fahrzeugposition, umfassend die folgenden Schritte:
- Erfassen des Startens eines Motors des Fahrzeugs,
- automatisches Abrufen einer Fahrzeugidentifikationsinformation von dem Fahrzeug, wenn der Motor gestartet wird,
- Aufbauen einer Verbindung zu einer externen Datenbasis gestohlener Fahrzeuge,
- Übertragen der abgerufenen Fahrzeugidentifikationsinformation über ein mobiles Telefonnetz zu der Datenbasis unter Verwendung einer Mobilkommunikationseinheit, wobei die Mobilkommunikationseinheit eine Teilnehmeridentifikationseinheit umfasst, welche ermöglicht, den Teilnehmer der Mobilkommunikationseinheit durch eine Teilnehmeridentifikationskarte zu identifizieren, wobei die Mobilkommunikationseinheit ein Freisprechsystem ist, welches eine Netzzugangsvorrichtung umfasst, wobei das Freisprechsystem die Teilnehmeridentifikationsinformation von einer Teilnehmeridentifikationskarte abruft, welche in einem Mobiltelefon vorgesehen ist, und wobei die Mobilkommunikationseinheit die Übertragung der Fahrzeugidentifikationsinformation ohne das Vorhandensein der Teilnehmeridentifikationskarte ermöglicht,
- Überprüfen, ob das identifizierte Fahrzeug in der Datenbasis gestohlener Fahrzeuge enthalten ist, und bei Bejahung:
- Bestimmen der Position des Fahrzeugs.

2. Verfahren nach Anspruch 1, wobei die Position des Fahrzeugs außerhalb des Fahrzeugs basierend auf dem übertragenen Informationssignal und/oder basierend auf einer Zelleninformation des Mobilkommunikationssystems bestimmt wird.

3. Verfahren nach einem der vorhergehenden Ansprüche, wobei die Position des Fahrzeugs basierend auf einem Satellitenfunksignal bestimmt wird.

4. Verfahren nach einem der vorhergehenden Ansprüche, wobei, wenn bestimmt wird, dass das identifizierte Fahrzeug in der Liste von gestohlenen Fahrzeugen enthalten ist, die Versorgung von Kraftstoff zu dem Motor abgeschaltet wird.

5. Verfahren nach einem der vorhergehenden Ansprüche, wobei, wenn bestimmt wird, dass das identifizierte Fahrzeug in der Liste von gestohlenen Fahrzeugen enthalten ist, die Positionsinformation des Fahrzeugs zu einer verantwortlichen Instanz übertragen wird.

6. Verfahren nach einem der vorhergehenden Ansprüche, wobei, wenn bestimmt wird, dass das identifizierte Fahrzeug in der Liste von gestohlenen Fahrzeugen enthalten ist, mindestens eine der folgenden Aktivitäten eingeleitet wird: der Fahrzeugmotor wird abgeschaltet, die Hupe des Fahrzeugs wird betätigt, ein Bild von der Fahrgastzelle wird aufgenommen.

7. Fahrzeug-Antidiebstahlsystem umfassend:
- eine Erfassungsvorrichtung, welche das Starten des Motors des Fahrzeugs erfasst,
- eine Mobilkommunikationseinheit für eine Kommunikation mit der Außenseite des Fahrzeugs über ein drahtloses Kommunikationssystem, wobei das drahtlose Kommunikationssystem ein Mobiltelefonnetz ist, wobei die Mobilkommunikationseinheit eine Teilnehmeridentifikationseinheit umfasst, welche ermöglicht, den Teilnehmer der Mobilkommunikationseinheit über eine Teilnehmeridentifikationskarte zu identifizieren, und wobei die Mobilkommunikationseinheit ein Freisprechsystem ist, welches eine Netzzugangsvorrichtung umfasst, wobei das Freisprechsystem ausgestaltet ist, die Teilnehmeridentifikationsinformation von einer Teilnehmeridentifikationskarte, welche in einem Mobiltelefon vorgesehen ist, abzufragen,
- eine Fahrzeugidentifikationseinheit, welche automatisch eine Fahrzeugidentifikationsinformation von dem Fahrzeug abruft, wenn der Motor gestartet wird,
- eine Übertragungseinheit, welche die Fahrzeugidentifikationsinformation zu einer externen Datenbasis gestohlener Fahrzeuge über das Mobiltelefonnetz überträgt, wobei die Mobilkommunikationseinheit die Übertragung der Fahrzeugidentifikationsinformation ohne das Vorhandensein der Teilnehmeridentifikationskarte ermöglicht, und
- eine Positionsbestimmungseinheit, welche aufgrund eines Erfassens, dass das Fahrzeug als ein gestohlenes Fahrzeug erkannt wurde, die Position des Fahrzeugs bestimmt.

8. Fahrzeug-Antidiebstahlsystem nach Anspruch 7, wobei die Positionsbestimmungseinheit außerhalb des Fahrzeugs enthalten ist.

9. Fahrzeug-Antidiebstahlsystem nach einem der Ansprüche 7-8, wobei das Mobilkommunikationssystem eine Netzzugangsvorrichtung umfasst, mit welcher Informationen über das drahtlose Kommunikationsnetz übertragen werden können.

10. Fahrzeug-Antidiebstahlsystem nach einem der Ansprüche 7-9, wobei die Positionsbestimmungseinheit die Position des Fahrzeugs basierend auf der Zelleninformation eines Mobiltelefonnetzes bestimmt.

11. Fahrzeug-Antidiebstahlsystem nach einem der Ansprüche 7-10, wobei die Datenbasis gestohlener Fahrzeuge auf einem über das drahtlose Kommunikationsnetz zugreifbaren Server bereitgestellt wird.

12. Fahrzeug-Antidiebstahlsystem nach einem der Ansprüche 7-11, **gekennzeichnet durch** ferner umfassend eine Motorsteuereinheit, welche aufgrund einer Erfassung, dass das Fahrzeug gestohlen ist, das Funktionieren des Fahrzeugmotors unterbricht.

## Revendications

1. Procédé d'identification de la position d'un véhicule, comprenant les étapes suivantes:
- détection du démarrage d'un moteur du véhicule,
- récupération automatique d'une information d'identification provenant du véhicule lors du démarrage du véhicule,
- établissement d'une connexion avec un banc de données externe de véhicules volés,
- transmission audit banc de données de l'information d'identification de véhicule récupérée par l'intermédiaire d'un réseau de téléphonie mobile en utilisant une unité de communication mobile, l'unité de communication mobile comprenant une unité d'identification d'abonné permettant d'identifier l'abonné de l'unité de communication mobile au moyen d'une carte d'identification d'abonné, dans lequel l'unité de communication mobile est un système mains libres comprenant un dispositif d'accès au réseau, le système mains libres récupérant l'information d'identification d'abonné à partir d'une carte d'identification d'abonné fournie dans un téléphone cellulaire, et dans lequel l'unité de communication mobile autorise la transmission de l'information d'identification de véhicule sans la présence de la carte d'identification d'abonné,
- vérifier si le véhicule identifié est compris dans la base de données de véhicules volés, et, dans l'affirmative,
- déterminer la position du véhicule.

2. Procédé selon la revendication 1, dans lequel la position du véhicule est déterminée à l'extérieur du véhicule à base du signal d'information transmis et/ou à base d'une information de cellule du système de communication mobile.

3. Procédé selon l'une quelconque des revendications précédentes, dans lequel la position du véhicule est déterminée à base d'un signal radio-satellitaire.

4. Procédé selon l'une quelconque des revendications précédentes, dans lequel, lorsqu'on détermine que le véhicule identifié est compris dans la liste de véhicules volés, l'alimentation en carburant du moteur est arrêtée.

5. Procédé selon l'une quelconque des revendications précédentes, dans lequel, lorsqu'on déterminé que le véhicule identifié est compris dans la liste de véhicules volés, l'information de position du véhicule est transmise à une autorité responsable.

6. Procédé selon l'une quelconque des revendications précédentes, dans lequel, lorsqu'on déterminé que le véhicule identifié est compris dans la liste de véhicules volés, au moins l'une des activités suivantes est déclenchée: le moteur du véhicule est arrêté, le klaxon du véhicule est activé, l'habitacle est pris en photo.

7. Système antivol de véhicule, comprenant:
- un détecteur détectant le démarrage du moteur du véhicule,
- une unité de communication mobile pour communiquer avec l'extérieur du véhicule par l'intermédiaire d'un système de communication sans fil, dans lequel le système de communication sans fil est un réseau de téléphonie mobile, l'unité de communication mobile comprenant une unité d'identification d'abonné permettant l'identification de l'abonné de l'unité de communication mobile au moyen d'une carte d'identification d'abonné, et dans lequel l'unité de communication mobile est un système mains libres comprenant un dispositif d'accès au réseau, le système mains libres étant adapté pour récupérer l'information d'identification d'abonné à partir d'une carte d'identification d'abonné fournie dans un téléphone cellulaire,
- une unité d'identification de véhicule récupérant automatiquement une information d'identification de véhicule provenant du véhicule lors du démarrage du moteur,
- un émetteur transmettant l'information d'identification de véhicule à un banc de données extérieur de véhicules volés par l'intermédiaire du réseau de téléphonie mobile, dans lequel l'unité de communication mobile autorise la transmission de l'information d'identification de véhicule sans la présence de la carte d'identification d'abonné, et
- une unité de détermination de position qui, sur détection que le véhicule est reconnu comme un véhicule volé, détermine la position du véhicule.

8. Système antivol de véhicule selon la revendication 7, dans lequel l'unité de détermination de position est comprise à l'extérieur du véhicule.

9. Système antivol de véhicule selon l'une quelconque des revendications 7 à 8, dans lequel le système de communication mobile comprend un dispositif d'accès au réseau par lequel une information peut être transmise par l'intermédiaire du réseau de communication sans fil.

10. Système antivol de véhicule selon l'une quelconque des revendications 7 à 9, dans lequel l'unité de détermination de position détermine la position du véhicule à base de l'information de cellule d'un réseau de téléphonie mobile.

11. Système antivol de véhicule selon l'une quelconque des revendications 7 à 10, dans lequel la base de données de véhicules volés est fournie sur un serveur accessible par l'intermédiaire du réseau de communication sans fil.

12. Système antivol de véhicule selon l'une quelconque des revendications 7 à 11, **caractérisé en ce qu'**il comprend en outre une unité de commande de moteur qui, sur détection que le véhicule est volé, arrête le fonctionnement du moteur du véhicule.
